# EUROPEAN PATENT APPLICATION

(11) **EP 4 818 518 A1**
(43) Date of publication of application: **07.10.2026**
(21) Application number: 26155348.1
(22) Date of filing: 30.01.2026
(51) Int. Cl.: F04B 43/00, F04B 43/12

(54) **METHOD AND SYSTEM FOR PHOTOTUNABLE SELF-SUSTAINABLE WAVES OF TUBULAR SOFT ACTUATOR**

(30) Priority: 02.04.2025 CN 202510411139
(71) Applicant: Westlake University, Hangzhou, Zhejiang 310030 (CN)
(72) Inventor: LV, JIU'AN, Zhejiang, 310030 (CN); ZHAO, Tonghui, Zhejiang, 310030 (CN)
(74) Representative: karo IP

(57) **Abstract**

A method and a system for phototunable self-sustainable waves of tubular soft actuator, comprises: constraining one side tubular wall of tubular soft actuator, and continuously irradiating unconstrained free tubular wall by a driving light source, wherein the free tubular wall undergoes local contraction and expansion deformations under stimulation by a constant light source. Depending on the light intensity and/or the incident angle of the driving light source, the tubular soft actuator can be manipulated to transition between a concertina-origami structure and a diamond-origami structure. The tubular soft actuator utilizes tunable mechanical instabilities induced by light-driven tubular wall deformations to generate multimodal wave structures, the wave motion of the tubular wall has adjustable degrees of freedom, spatiotemporal non-reciprocity, and autonomous motion, and the wave pattern propagates along the direction of light irradiation, enabling autonomous, self-sustainable, and controllable 3D waves by the tubular soft actuator.

## Description

### Technical Field

The present invention relates to the field of energy machinery conversion, particularly to a method and system for phototunable self-sustainable waves of tubular soft actuator.

### Background

Tubular peristaltic pumping (TPP) is the most prevalent valve-less pumping method for living systems. It is widely adopted by hollow tube organs of numerous living organisms, ranging from small-sized arthropods, medium-sized humans, to large-sized adult sperm whales- which span over three different magnitudes in diameter and length (from mm to m). Biological tubular organs, e.g., stomach, intestine, and arteries, can spatiotemporally deform their muscular tubular wall to generate high-degree-of-freedom peristaltic autowaves enabling versatile pumping abilities. For Embodiment, they are applicable for a variety of in traluminal matter (liquids, solids, and their mixtures), even for viscous fluids, effective pumping in such cases where viscous forces dominate over inertia (at low Reynolds numbers), is achieved via non-reciprocal 3D motions of local tubular walls. Moreover, biological tubular organs exhibit autonomous, self-sustainable pumping ability, this arises from their non-equilibrium dynamics that can produce continuous, periodic wall motions fueled by constant input of chemical energy.

For traditional artificial pumping systems based on non-responsive soft materials, implementing biomimetic TPP in the passive soft tubular device demands a large number of discrete external actuators. Each actuator must be individually addressed, powered, and controlled in a coordinated manner, inevitably leading to complexity in the design, fabrication, and control of the device. Such traditional implementation resists device miniaturization, because of the insurmountable hurdles of integrating so many discrete actuators on a small scale. Active soft materials (ASMs) capable of stimuli-responsive deformations, such as gels, dielectric elastomers, and liquid crystal polymers, represent a promising route toward advanced biomimetic TTP systems. Several pioneering works have leveraged ASMs to create artificial active tubular pumping systems (Artificial *ATPSs*) that can make use of responsive wall deformations to induce hydrodynamic forces, hydraulic forces, and capillary forces for pumping.

However, it is worth noting that seldom reported Artificial *ATPSs* can mimic their biological counterparts leveraging peristaltic autowave for pumping, because of the extreme challenge to achieve spatiotemporal and autonomous deformation in 3D tubular soft actuators, except one landmark work using tubular self-oscillating gel. However, the tubular gel must work in wet and specific chemical conditions, since its driving force arises from swelling and deswelling of the material by Belousov-Zhabotinsky reaction, whereas most practical applications prefer dry and chemical-free working environments. Current Artificial *ATPSs* are far from reaching the versatile pumping abilities of their biological counterparts. Compared to biological TTPs, they are unfeasible for pumping vicious matter with very small Reynolds numbers due to their symmetric reciprocal wall deformations that cannot break the time-reversal symmetry essential to effective pumping; In addition, they lack autonomy. Because they are usually designed for equilibrium systems, this leads to monotonic wall deformation upon constant and static energy input, and thus autonomous, self-sustainable pumping is largely absent.

Therefore, a creative design strategy that endows deformable walls with peristaltic wave motions that can break time-reversal symmetry and system equilibrium for synthetic active tubular soft actuators is highly desired to develop advanced versatile biomimetic TPP systems with adaptable and autonomous pumping abilities.

### Summary of the invention

The present invention aims to provide a method and system for phototunable self-sustainable waves of tubular soft actuator. This tubular soft actuator employs tunable mechanical instabilities induced by light-driven deformations of its tubular walls to produce multimodal wave structures. The wave motion of the tubular wall exhibits adjustable degrees of freedom, spatiotemporal non-reciprocity, and autonomous motion. Furthermore, the wave pattern propagates in the direction of light irradiation, thereby enabling autonomous, self-sustainable, and controllable 3D waves through the tubular soft actuator.

To achieve the aforementioned objective, the present invention, in its first aspect, provides a method for generating self-sustainable waves in a phototunable tubular soft actuator. This method comprises the following steps: constraining one side of the tubular wall of the actuator while continuously irradiating the unconstrained, free tubular wall with a driving light source. The raw material used for the tubular soft actuator is a light-responsive, deformable soft material that is either doped with or chemically bonded to a photosensitive material. The actuator itself is designed as a three-dimensional hollow tube. Under stimulation from a constant light source, the free tubular wall experiences local contraction and expansion deformations, which drive the tubular soft actuator to generate autonomous wave motion characterized by a specific wave structure. This wave structure can either be a concertina-origami structure or a diamond-origami structure.

In certain embodiments, the orientation of the liquid crystal elements within the tubular soft actuator exhibits a circumferential alignment around the tube. Upon exposure to light irradiation, these liquid crystal elements generate circumferential contraction and axial expansion.

It is important to note that, because the tubular soft actuator described in the present invention is a three-dimensional structure, the liquid crystal elements are aligned circumferentially around the actuator. This circumferential alignment results in the generation of heat upon light irradiation, leading to contraction in the direction of the liquid crystal orientation and expansion perpendicular to that orientation. Consequently, the tubular soft actuator exhibits circumferential contraction and axial expansion when subjected to light irradiation. The axial expansion introduces axial stress, which can induce instability in the tubular wall of the actuator. Simultaneously, the circumferential contraction causes an inward folding of the tubular wall. These two orthogonal and opposing deformation trends give rise to direction- and dimension-tunable wall instabilities, which facilitate tunable mechanical instabilities within the geometric hollow tube structure of the tubular soft actuator. Such tunable mechanical instabilities prompt the tubular wall to buckle and fold, thereby generating multimodal wave structures.

In certain embodiments, the driving light source stably and continuously irradiates the unconstrained, free tubular wall of the tubular soft actuator with a specific light intensity and incident angle. The incident angle ranges from 0° to 60°, while the intensity varies from 0.1 W·cm⁻² to 0.8 W·cm⁻².

In certain embodiments, the driving light source remains static, allowing the tubular soft actuator to spontaneously undergo self-sustainable, autonomous wave motion characterized by a specific wave structure. It is important to note that when the static driving light source irradiates the tubular soft actuator, it induces the generation of a wave structure. The wave associated with the diamond structure can facilitate the rotation of objects within the tubular soft actuator, enabling these objects to rotate either counterclockwise or clockwise during transport. The direction of rotation can be controlled by adjusting the irradiation direction and position of the light source on the tubular wall.

It is important to clarify that the phrase "the driving light source is static" indicates that the driving light source does not need to change its position during irradiation. In other words, the driving light source in the present invention is fixed to irradiate a specific location on the unconstrained, free tubular wall of the tubular soft actuator, enabling the actuator to undergo self-sustainable, autonomous wave motion. The term "self-sustainable" denotes that the tubular soft actuator operates without the need for additional external forces; it generates wave motion and produces various wave structures solely under the irradiation of the static driving light source.

Furthermore, the autonomous wave motion generated by the tubular soft actuator described in the present invention is characterized as multi-dimensional Rayleigh-like wave motion. This motion exhibits adjustable degrees of freedom, spatiotemporal non-reciprocity, and autonomous motion characteristics.

Furthermore, the stable driving light source continuously irradiates the unconstrained, free wall of the tubular soft actuator at a specific incident angle. As a result, the tubular soft actuator simultaneously undergoes circumferential contraction and axial expansion.

In some embodiments, the driving light source can be any of the following: sunlight, ultraviolet light, visible light, LED blue light, red light, or near-infrared light. The selection of the driving light source is contingent upon the type of photosensitive material used to prepare the tubular soft actuator. For instance, if the photosensitive material absorbs near-infrared light, then a near-infrared light source is chosen. For example, if the photosensitive material is croconaine dye, near-infrared light would be selected as the driving light source.

Preferably, when the tubular soft actuator exhibits strong absorption of near-infrared light, the near-infrared light is selected as the driving light source. Conversely, when the tubular soft actuator strongly absorbs blue light, LED blue light is chosen as the driving light source.

In some embodiments, the light-responsive deformable soft material is selected from the group consisting of gels, hydrogels, and liquid crystal elastomers. Preferably, the light-responsive deformable soft material is a liquid crystal elastomer.

The preparation method of the tubular soft actuator is as follows: First, a square mold is used to preliminarily shape the liquid crystal elastomer prepolymer, which is chemically bonded with a light-absorbing agent, into a sheet-like film precursor. Next, the sheet-like film precursor undergoes uniaxial stretching to continue the reaction. After the reaction is complete, the film is cut into a strip-shaped film of a specific size along the direction perpendicular to the stretching orientation. Finally, the film is rolled along the stretching orientation direction to form a tubular structure, thus obtaining the tubular soft actuator.

Specifically, the sheet-like film precursor is a weakly cross-linked network formed through preliminary chemical cross-linking reactions. After initial curing, the incompletely cross-linked sheet-like film precursor is removed from the mold. This precursor is then subjected to uniaxial stretching to generate strain. Once the tensile strain is fixed, the stretched sheet is further stabilized by continuing the chemical cross-linking reaction. The resulting film is cut into a rectangular sheet along the direction perpendicular to the stretching orientation. This rectangular sheet is then coiled around a cylindrical body in the orientation direction, and the ends of the solid rectangular sheet are bonded with adhesive. Finally, the cylindrical body is removed, resulting in a tubular structure that exhibits shrinkage and expansion deformation functionality.

The liquid crystal elastomer prepolymer is formed by bonding or doping monomers containing liquid crystal elements with photosensitive materials through enol click reactions, Michael addition reactions, or free radical polymerization within a square mold. This process results in a sheet-like film precursor characterized by a weakly cross-linked network formed via a chemical cross-linking reaction. When this sheet-like film precursor of the liquid crystal elastomer undergoes axial stretching, the liquid crystal elements are oriented. Following the stretching operation, the orientation of the liquid crystal elements is induced and fixed through a subsequent chemical cross-linking reaction. This process yields a light-responsive liquid crystal elastomer film material, which serves as the raw material for the tubular soft actuator.

In the present invention, the photosensitive material is capable of absorbing light and converting it into thermal energy upon light irradiation. This photosensitive material can consist of both organic and inorganic materials, including carbon nanotubes, graphene, light-absorbing dyes, light-absorbing inks, and more. Depending on the specific reactions of the photosensitive material to varying lighting conditions, different driving light sources can be employed to effectively manipulate the tubular soft actuator.

Additionally, during the stretching and orientation process of the sheet-like film precursor, the thiol functional groups and olefin functional groups undergo complete cross-linking and curing, resulting in a liquid crystal elastomer film with uniaxial orientation. This liquid crystal elastomer film exhibits a unique behavior: when exposed to light irradiation, it shrinks along the direction of liquid crystal orientation while expanding in the orthogonal direction. Consequently, the tubular structure formed by coiling the liquid crystal elastomer film will experience shrinkage in the circumferential direction along its inner diameter and expansion in the axial direction when subjected to light irradiation.

Specifically, the composition of the sheet-like film precursor can be selected from a combination of monomers that includes a liquid crystal monomer containing acrylic ester double bonds, a crosslinking agent with thiol groups, and a light-absorbing agent. These combination monomers are dissolved in organic solvents to create a mixed solution, which is then shaken and thoroughly mixed. After this, a catalytic agent is added to the mixture. The catalytic combination of monomers undergoes a chemical reaction that facilitates crosslinking, and the resultant mixture is placed in a specific mold for initial solidification, leading to the formation of the sheet-like film precursor.

In one embodiment of the present invention, the liquid crystal elastomer prepolymer is synthesized through an enol click reaction. The liquid crystal monomer containing acrylic double bonds used is RM82, while the monomers containing thiol groups are selected from 2,2'-(1,2-ethylenedioxo) diethyl mercaptan (DODT) and tetrakis(3-mercaptopropionic acid) pentaerythritol ester (PETMP). The photosensitive material utilized is an azobenzene-modified dye containing acrylic reactive groups. This configuration allows the resulting liquid crystal elastomer and the tubular soft actuator to exhibit stimulus-responsive deformation when exposed to visible light. The molar ratio of RM82 to the azobenzene-modified dye is set at 9:1, while the molar ratio of DODT to PETMP is 2:1. Additionally, the molar ratio of thiol groups to acrylate groups in the reactants is maintained at 1:1. Dichloromethane is chosen as the organic solvent for this process. It should be noted that other combinations of monomers that meet these criteria can also be utilized as materials for the liquid crystal elastomer precursors.

Catalysts suitable for the reaction can include di-n-propylamine (DPA), hexamethylamine (HexAM), triethylamine (TEA), N, N, N', N'-tetramethyl-1,8-naphthalenediamine (PS), 1,8-diazo-spiro[5.4.0]undec-7-ene, 1,8-diazabicyclo[5.4.0]undec-7-ene (DBU), and 15-diazabicyclo[4.3.0]non-5-ene (DBN), among others. In the embodiments, 4 wt% of di-n-propylamine (DPA) is selected as the catalyst for the reaction. This catalyst concentration aids in facilitating the crosslinking process during the formation of the liquid crystal elastomer prepolymer.

The photosensitive material utilized in this embodiment exhibits significant photothermal excitation effects, leading to an increase in the surface temperature of the tube actuator wall when exposed to light irradiation. The temperature changes induced by the light further trigger expansion, contraction, and deformation in the areas of the tubular wall that are irradiated. In this case, the doped photosensitive material is a dye with pronounced absorption properties for visible light, enabling it to effectively convert visible light into heat, which in turn facilitates the desired deformation response. Moreover, other photosensitive materials that are sensitive to specific wavelengths can also be incorporated into the tubular soft actuator. This allows for the achievement of deformation under illumination from various specific wavelengths, broadening the functional capabilities of the actuator based on the absorption characteristics of the chosen materials.

During the stretching stage, the film can be stretched anywhere from 5% to 100% and then fixed in that extended state for a period of 24 to 36 hours. In this particular embodiment, the film is specifically stretched by 50%. Additionally, in another embodiment of the present invention, the film is stretched and fixed for a duration of 24 hours.

In some embodiments of the present invention, the tubular soft actuator exhibits self-oscillating behavior in the X, Y, and Z directions. This dynamic capability allows for in-situ switching between different structural configurations, specifically the concertina-origami structure and the diamond-origami structure. By adjusting the light intensity and the incident angle of the driving light source, the actuator can be manipulated to transition between these two configurations.

Specifically, when the axial stress induced by the driving light source at the irradiation position reaches a level sufficient to cause lateral buckling in the radial direction of the tubular soft actuator, the local tubular wall that is irradiated will experience lateral buckling along both the diameter and transverse directions. This phenomenon triggers the formation of a post-buckling wall structure. As a result of this structural change, the post-buckling wall naturally folds into either a symmetric concertina structure or an asymmetric diamond structure. The specific folding pattern is influenced by the effects of circumferential contraction and axial expansion occurring at adjacent deformation positions. Furthermore, this folding process can spontaneously propagate along the direction of illumination, enabling dynamic and controlled transformations of the actuator's shape in response to the light stimulus.

It is important to note that the formation of the asymmetric diamond structure wave configuration requires simultaneous regulation of both the light intensity and the incident angle of the driving light source. In contrast, when aiming to form the symmetric concertina structure, either the light intensity or the incident angle can be adjusted independently. During the formation of the wave structure associated with the asymmetric diamond-origami configuration, the degree of lateral buckling along the diameter direction of the local tubular wall is greater than that observed during the formation of the symmetric concertina-origami structure. This distinction in the buckling behavior is crucial, as it influences the resulting shape and mechanical properties of the actuator, allowing for tailored responses based on the specific structural configuration desired.

In some embodiments, the generation of the concertina-origami structure occurs when the light intensity of the driving light source is set between 0.1 W•cm² and 0.8 W•cm², or when the incident angle is within the range of 0° to 60°. Conversely, the diamond-origami structure is produced when the light intensity is maintained between 0.5 W•cm² and 0.8 W•cm², and the incident angle is adjusted to between 10° and 40°.This indicates that the conditions for generating the diamond-origami structure require higher light intensity and specific incident angles compared to those needed for the concertina structure. Specifically, the light intensity and incident angle thresholds for the diamond-origami structure are greater, which reflects the more complex deformation and buckling behavior associated with this configuration.

Furthermore, the wave structure associated with the concertina-origami configuration exhibits an amplitude ranging from 0 mm to 1.9 mm, with a frequency between 0 Hz and 2 Hz, and a wavelength spanning from 0 mm to 16 mm. In contrast, the wave structure corresponding to the diamond-origami configuration has an amplitude that ranges from 0 mm to 1.0 mm, a frequency between 0 Hz and 1 Hz, and a wavelength from 0 mm to 10 mm.

In some embodiments, the tubular soft actuator is designed as a 3D hollow tube. The inner diameter of this hollow tube ranges from 2 mm to 5 mm, with a preferred value of 2 mm. The thickness of the tubular wall is specified to be between 90 µm and 120 µm, with a preferred thickness of 100 µm. Additionally, the overall length of the actuator is set between 30 mm and 50 mm.

In a second aspect, the present invention provides a system for phototunable self-sustainable waves of tubular soft actuator, comprising a driving light source and a tubular soft actuator, wherein the raw material of the tubular soft actuator is a light-responsive deformable soft material doped or chemically bonded with a photosensitive material, and the tubular soft actuator is a 3D hollow tube.

When the tubular wall of the tubular soft actuator is illuminated by the driving light source, the free tubular wall experiences local contraction and expansion deformation due to its flat structure. This light-induced deformation enables the tubular soft actuator to generate autonomous wave motion characterized by a distinct wave structure. The wave structure can be either a concertina-origami structure or a diamond-origami structure.

In other words, the free tubular wall of the tubular soft actuator undergoes adjustable mechanical instability induced by its flat structure, leading to local buckling deformation. This phenomenon results in the formation of various 3D wave structures, including at least one of the concertina-origami structure and the diamond-origami structure. The introduction of the tubular soft actuator and the driving light source in the context of the system for phototunable self-sustainable waves of tubular soft actuator has been discussed previously and will not be elaborated further. In this section, we emphasize an application of the system for phototunable self-sustainable waves of tubular soft actuator.

In some embodiments, the system for phototunable self-sustainable waves of tubular soft actuator is applied in various fields, including microfluidics, artificial tubular organs, and biomimetic pumping devices. Specifically, the system is utilized for the continuous directional pumping of high-viscosity liquids. In this application, the tubular soft actuator of the system functions as a peristaltic pump.

Of course, the system for phototunable self-sustainable waves of tubular soft actuator can also be utilized for the transportation of solids. Specifically, the system is designed to continuously and directionally transport a large volume of various regular and irregular solid matter. In this application, the tubular soft actuator functions as a transmission device.

In some embodiments, the system for phototunable self-sustainable waves of tubular soft actuator is utilized to rotate matter. In this configuration, the tubular flexible actuator serves as a rotating device. By adjusting the position and direction of the light spot from the driving light source illuminating the tubular soft actuator, the actuator can be controlled to achieve uniform rotation, either counterclockwise or clockwise.

Of course, by adjusting the position and direction of the light spot illumination from the driving light source, the system for phototunable self-sustainable waves of tubular soft actuator can simultaneously rotate matter both clockwise and counterclockwise while continuously and directionally transporting matter.

Compared to existing technologies, the present invention exhibits the following characteristics and beneficial effects: In the method and system for phototunable self-sustainable waves of tubular soft actuators, the tubular soft actuator is designed as a three-dimensional (3D) hollow tube structure capable of generating wave motions of various wave forms by utilizing adjustable mechanical instability induced by light-induced deformation of the tubular walls under the influence of a stable static light source. Moreover, the wave motion of the tubular soft actuator possesses adjustable degrees of freedom, spatiotemporal non-reciprocity, and autonomous motion. The wave patterns propagate in the direction of light irradiation, facilitating the generation of autonomous, self-sustainable, and controllable 3D waves by the tubular soft actuator. Additionally, based on the phototunable tubular soft actuator, an advanced system for the self-sustainable waves of phototunable tubular soft actuators can be developed, which has the capacity to break time-reversal symmetry and disrupt system balance, while exhibiting adaptability and autonomous pumping capability.

### Brief Description of the Drawings

Figure 1 illustrates the preparatory principle equation for the raw material used in a tubular soft actuator, as outlined in one embodiment of the present invention.
Figure 2 presents a schematic diagram alongside a digital photograph depicting two distinct wave motion modes of a tubular soft actuator, as described in one embodiment of the present invention.
Figure 3 illustrates the wave motion of the concertina structure generated by the system for phototunable self-sustainable waves of the tubular soft actuator under light irradiation, as described in one embodiment of the present invention.
Figure 4 depicts the wave motion of the diamond structure generated by the system for phototunable self-sustainable waves of the tubular soft actuator under light irradiation, in accordance with one embodiment of the present invention.
Figure 5 demonstrates the 3D wave motion generated by the system for phototunable self-sustainable waves of the tubular soft actuator under light irradiation, as described in one embodiment of the present invention.
Figure 6 illustrates the movement trajectory of a high viscosity solid-liquid mixture and its solid particles pumped by the system for phototunable self-sustainable waves of the tubular soft actuator, functioning as a peristaltic pump, in accordance with one embodiment of the present invention.
Figure 7 presents the system for phototunable self-sustainable waves generation of the tubular soft actuator functioning as a peristaltic pump, specifically designed for pumping droplets and bubbles, in alignment with one embodiment of the present invention.
Figure 8 illustrates one embodiment of the present invention, in which the system for phototunable self-sustainable waves generation of the tubular soft actuator is utilized as a transmission device for transporting solid matter.
Figure 9 depicts the system for phototunable self-sustainable waves generation of the tubular soft actuator functioning as a transmission device, specifically designed to transport a significant volume of both regular and irregular solid mixtures, in accordance with one embodiment of the present invention.
Figure 10 illustrates the system for phototunable self-sustainable waves generation of the tubular soft actuator being employed for curved structures, in accordance with one embodiment of the present invention.
Figure 11 demonstrates the rotation of matter as they are transported by the system for phototunable self-sustainable waves generation of the tubular soft actuator, in line with one embodiment of the present invention.
Figure 12 presents an embodiment of the system for phototunable self-sustainable waves generation of the tubular soft actuator being utilized in an intelligent controllable rotating device, according to one embodiment of the present invention.
Figure 13 illustrates the intensity and incident angle threshold of light produced by two distinct shape modes of automatic waves. In this figure, the red circle signifies the generation of accordion autowaves, while the green box indicates the generation of diamond autowaves. The blue-green star represents a transition state where both accordion and diamond autowaves can be generated, and the white cross denotes a state where no waveform generation occurs.

### Detailed Description of the Embodiments

The following section will provide a clear and comprehensive description of the technical solutions presented in the embodiments of the present invention, in conjunction with the accompanying drawings. It is important to note that the described embodiments represent only a subset of the potential embodiments of the present invention and are not exhaustive. All other variations and embodiments that can be derived by those skilled in the art based on the principles of the present invention fall within its protective scope.

Professionals in this field should recognize that the terms "longitudinal," "transverse," "up," "down," "front," "back," "left," "right," "vertical," "horizontal," "top," "bottom," "inside," "outside," and other directional or positional relationships used in this disclosure are based on the orientations and positions illustrated in the accompanying drawings. These terms are intended solely for the convenience of describing the present invention and to simplify the explanation, rather than to imply that the device or element in question must possess a specific orientation or be constructed and operated in a particular manner. Consequently, the aforementioned terminology should not be interpreted as a limitation of the present invention.

To facilitate subsequent experimental operations on this scheme, Preparation Embodiment 1 is outlined below:
The molar ratio of RM82 to the modified azobenzene dye was established at 9:1. The molar ratio of DODT to PETMP was maintained at 2:1, and the molar ratio of the reactant thiol groups to acrylate groups was set at 1:1. Dichloromethane was selected as the organic solvent, and the mixture was shaken for 60 seconds to ensure thorough mixing, resulting in a homogeneous mixed solution. Subsequently, 4 wt% DPA was added as a catalyst to the mixed solution, followed by shaking and dissolving to obtain a precursor solution. The precursor solution was then poured into a square glass mold measuring 5 cm × 5 cm × 0.5 cm and allowed to react at room temperature for 2 hours. After the reaction period, the partially crosslinked liquid crystal elastomer film precursor was carefully peeled off the mold. The partially crosslinked liquid crystal elastomer film was subjected to a tensile strain of 50% and fixed in position for 24 hours to ensure complete reaction and crosslinking of the thiol and acrylic groups, resulting in a monodomain-oriented liquid crystal elastomer film. A rectangular strip was cut from the oriented film, with a specified width along the direction perpendicular to the liquid crystal orientation, using a blade. This strip was then curled along the direction parallel to the liquid crystal orientation to form a tubular structure, thereby obtaining the phototunable tubular soft actuator.

Specifically, the following experimental procedures will be conducted utilizing the tubular soft actuator obtained from Embodiment 1:
Embodiment 1: The system for phototunable self-sustainable waves of the tubular soft actuator generates a concertina-like wave motion under blue light irradiation.:
The tubular soft actuator obtained in Preparation Embodiment 1 has a length of 30 mm, an inner diameter of 2 mm, and a wall thickness of 0.1 mm, with the bottom end of the tube fixed in place. The actuator is illuminated using an LED blue light source (450 nm), which provides a light intensity of approximately 0.61 W·cm⁻² at an incident angle of 12°.

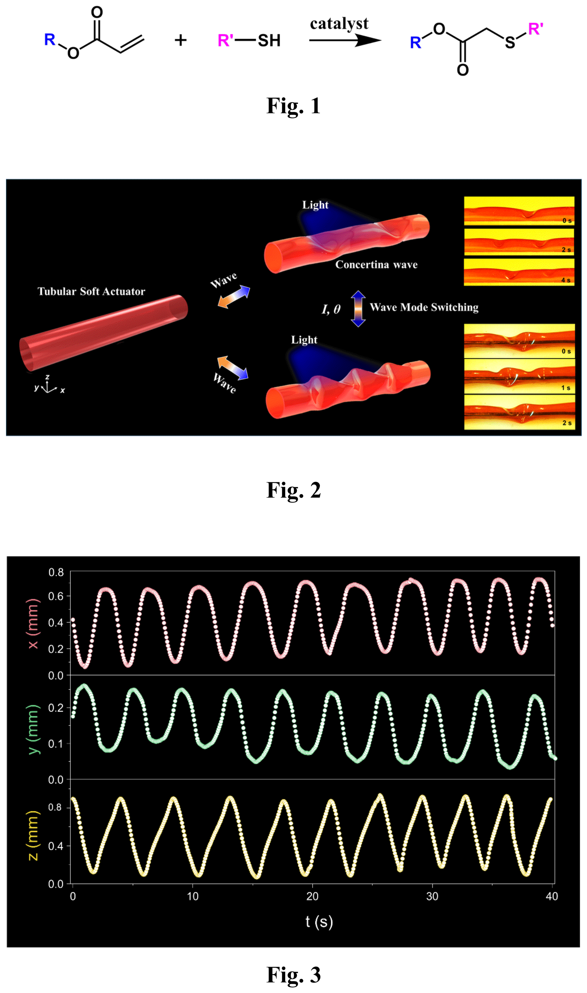

Result: As shown in Figure 3, upon activation of the constant LED blue light source, the tubular wall of the soft actuator exhibits continuous concertina wave motion, with frequencies and amplitudes of 0.3 Hz and 0.9 mm, respectively. Figure 3 illustrates the periodic variations in the concertina wave motion along the x-axis, y-axis, and z-axis directions, reflecting the periodic changes in both amplitude and frequency of the vibrational waves.

Embodiment 2: The system for phototunable self-sustainable waves of the tubular soft actuator generates diamond wave motion under blue light irradiation:
Embodiment 1 was repeated, with the blue light intensity set to approximately 0.6 W·cm⁻² and the incident angle adjusted to 20°.

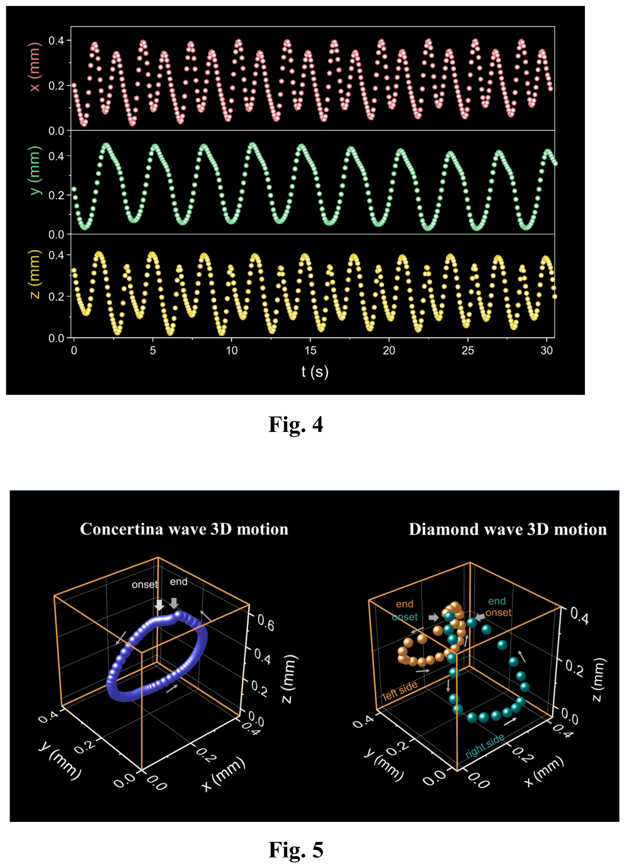

Results: As shown in Figure 4, upon activation of the constant LED blue light source, the tubular wall of the soft actuator exhibits continuous diamond-structured wave motion, with frequencies and amplitudes of 0.4 Hz and 0.4 mm, respectively. Figure 4 illustrates the periodic variations in the diamond wave motion along the x-axis, y-axis, and z-axis directions, reflecting the periodic changes in both amplitude and frequency of the vibrational waves.

Embodiment 3: The system for phototunable self-sustainable waves of the tubular soft actuator generates three-dimensional (3D) structured wave motion under blue light irradiation.

Embodiment 1 and Embodiment 2 were repeated, marking a position on the tubular wall and recording the movement trajectory of that position along the x-axis, y-axis, and z-axis during periodic wave motion.

Results: As shown in Figure 5, a three-dimensional (3D) displacement image of the marked points was plotted. The marked points exhibited 3D motion characteristics during periodic wave motion, reflecting the 3D wave motion of concertina waves and diamond waves under light irradiation.

Embodiment 4: The system for phototunable self-sustainable waves of the tubular soft actuator functions as a "peristaltic pump" for pumping high-viscosity solid-liquid mixtures.

Embodiment 1 was repeated, with the exception that the blue light intensity was approximately 0.7 W·cm⁻² and the incident angle was 17°. A mixture of silicone oil and polystyrene microspheres was injected into the tubular actuator, where the microsphere diameter was 0.3 mm, and the viscosity of the silicone oil ranged from 10 to 1 × 10⁶ cSt.

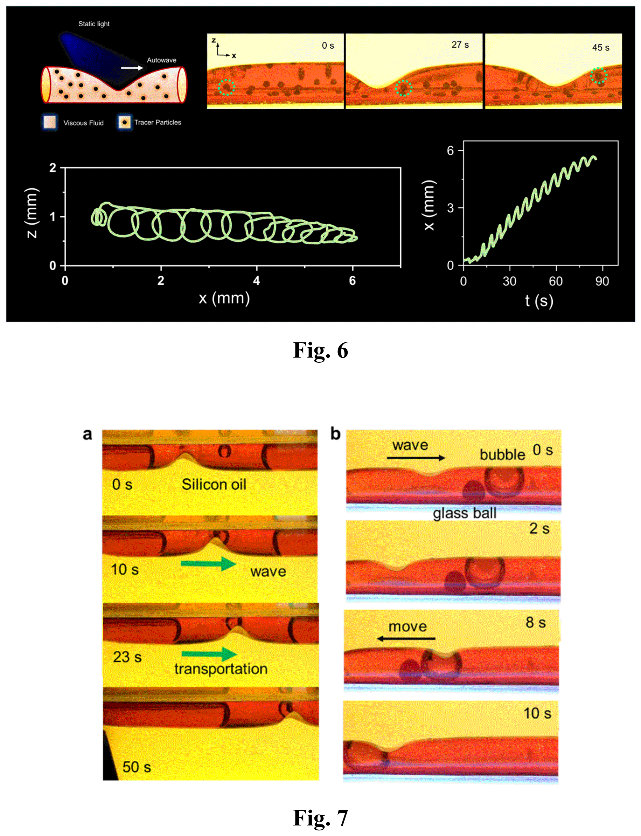

As shown in Figure 6, after activating the blue light source, the tubular soft actuator generates automatic and continuous concertina waves. Through the driving force of these waves, the silicone oil inside the tubular actuator is slowly transported in the direction of the light. The pumping rate of the silicone oil varies with its viscosity, ranging from 0.003 mm·s⁻¹ to 0.2 mm·s⁻¹. Meanwhile, the movement of the microspheres is also facilitated, and their trajectory along the x-axis and z-axis is recorded in Figure 6.

Embodiment 5: The system for phototunable self-sustainable waves of the tubular soft actuator functions as a "peristaltic pump" for pumping droplets and bubbles.

Embodiment 4 was repeated, with the exception that silicone oil droplets and bubbles were injected into the tubular actuator. When pumping droplets, the blue light intensity was approximately 0.6 W·cm⁻² and the incident angle was 15°. In contrast, when pumping bubbles, the blue light intensity was approximately 0.55 W·cm⁻², while the incident angle remained at 15°.

Results: As shown in Figure 7, after activating the blue light source, the tubular soft actuator generates automatic and continuous concertina waves. The motion behavior of the fluctuating tubular wall exhibits spatiotemporal non-reciprocity and autonomous motion. Driven by these waves, the silicone oil droplets inside the tubular actuator are transported toward the direction of the light, while the bubbles within the tube gradually move in the opposite direction.

Embodiment 6: The system for phototunable self-sustainable wavese of the tubular soft actuator is designed to transport solid matter.

Embodiment 1 was repeated, with the distinction that microspheres, square foam, iron wire, and noodles were introduced into the tubular actuator. When conveying objects, the blue light intensity ranged from 0.4 W·cm⁻² to 0.6 W·cm⁻², with an incident angle of 15°. In contrast, when pumping bubbles, the blue light intensity was approximately 0.55 W·cm⁻², with the incident angle varying between 15° and 19°.

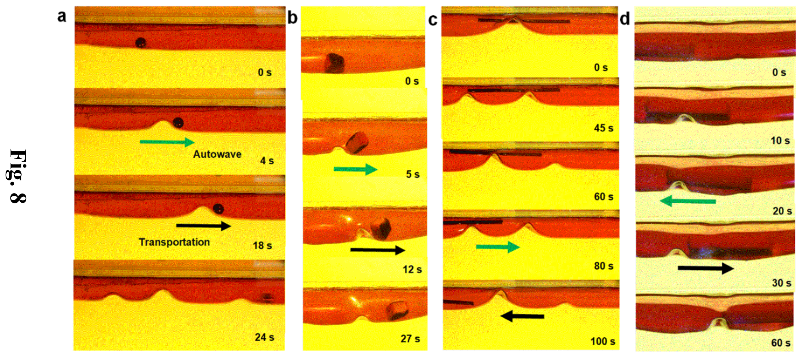

Results: As shown in Figure 8, after activating the blue light source, the tubular soft actuator generates automatic and continuous concertina waves. Driven by these waves, small-sized objects inside the tubular actuator are slowly transported in the direction of the waves, while large-sized objects gradually move in the opposite direction.

Embodiment 7: The system for phototunable self-sustainable waves of the tubular soft actuator is capable of transporting a large volume of solid mixtures.

Embodiment 6 was repeated, with the exception that a large number of regular and irregular solid mixtures were placed inside the tube. When conveying matter, the blue light intensity was measured at 0.65 W·cm⁻², with an incident angle of 14°.

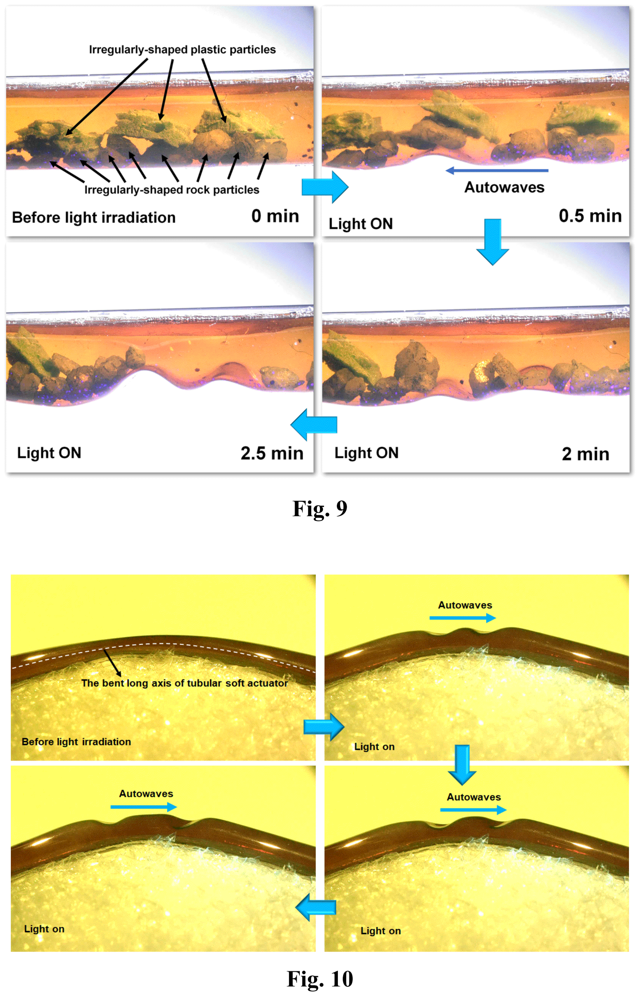

Results: As shown in Figure 9, after activating the blue light source, the tubular soft actuator generates automatic and continuous concertina waves. Driven by these waves, the intraluminal matter are slowly transported in the direction of the waves.

Embodiment 8: Application of the system for phototunable self-sustainable waves of the tubular soft actuator on curved surfaces.

Embodiment 1 was repeated, with the tubular actuator fixed to a curved surface to facilitate bending. The blue light intensity was set at 0.6 W·cm⁻², and the incident angle was 7°.

Results: As shown in Figure 10, the tubular soft actuator can operate on curved substrate surfaces under light irradiation, demonstrating excellent mechanical plasticity.

Embodiment 9: Application of the system for phototunable self-sustainable waves of the tubular soft actuator for coordinating intraluminal matter transportation and rotation.

Embodiment 1 was repeated, with the exception that a steel needle with a diameter of 1.2 mm was inserted into the tubular actuator. The blue light intensity was set at 0.65 W·cm⁻², and the incident angle was 22°.

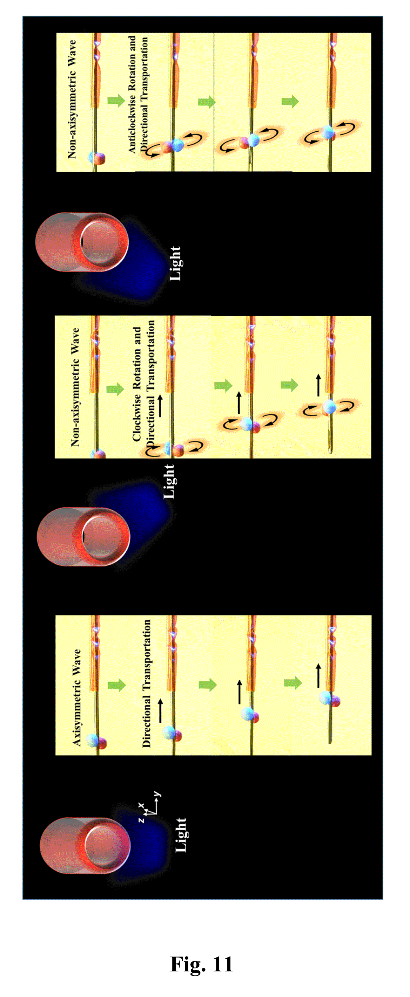

Results: As shown in Figure 11, upon activation of the blue light source, the tubular soft actuator generates automatic and continuous diamond waves. The motion behavior of the fluctuating tube wall exhibits spatiotemporal non-reciprocity and motion autonomy. Driven by these waves, the steel needle inside the tubular actuator is transported in the direction of the waves while also rotating. The direction of rotation is determined by controlling the position and orientation of the light irradiation.

Embodiment 10: Application of the system for phototunable self-sustainable waves of the tubular soft actuator as a rotating device.

Embodiment 9 was repeated, with the exception that a steel needle featuring a "windmill" structure was inserted into the tubular actuator, with a diameter of 1.2 mm. The blue light intensity was set at 0.7 W·cm⁻², and the incident angle was 20°.

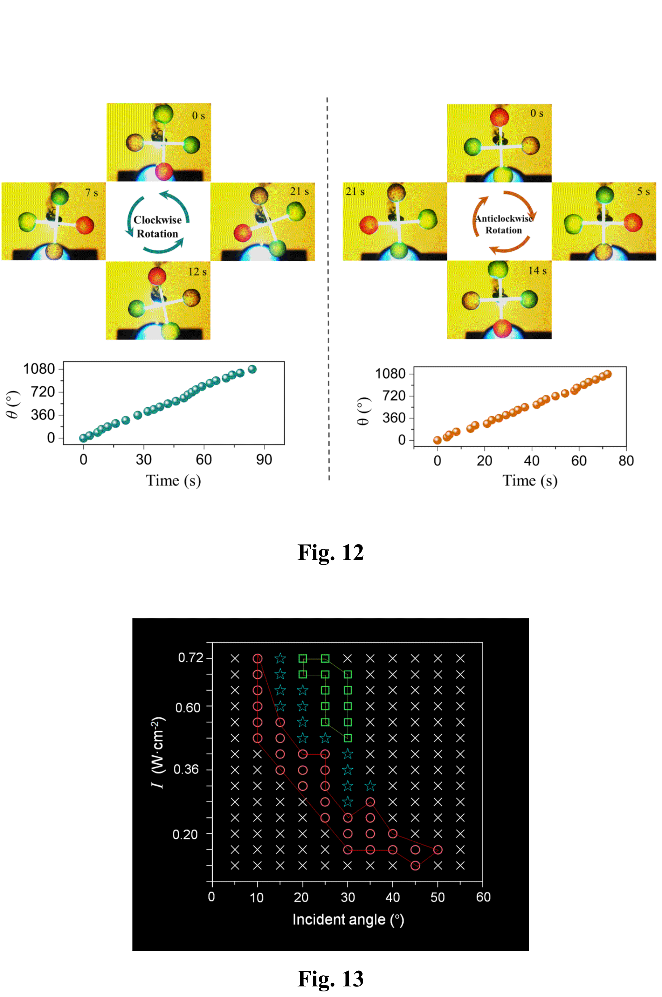

Results: As shown in Figure 12, upon activation of the blue light source, the tubular soft actuator generates automatic and continuous diamond waves. By controlling the illumination position and direction of the light source, the system enables a high degree of freedom in matter-driving behavior. The generated diamond waves cause the "windmill" to rotate either counterclockwise or clockwise in a controllable manner. The change in rotation angle over time is recorded in Figure 12.

Technicians in this field should recognize that the various technical features of the aforementioned embodiments can be combined in multiple ways. To maintain conciseness in the description, not all possible combinations of the technical features from the above embodiments have been detailed. However, any combinations of these features that do not contradict one another should be considered within the scope of this specification.

The above embodiments represent several examples of the present application, with descriptions that are specific and detailed; however, they should not be interpreted as limiting the scope of the application. It is important to note that those skilled in the art may implement various modifications and improvements without departing from the underlying concepts of this application, and such modifications fall within the scope of protection of this application. Therefore, the scope of protection should be determined based on the attached claims.

## Claims

1. A method for phototunable self-sustainable waves of tubular soft actuator, wherein, comprising the following steps: constraining one side tubular wall of the tubular soft actuator, and continuously irradiating the unconstrained free tubular wall by a driving light source, a raw material of the tubular soft actuator is a light-responsive deformable soft material doped or chemically bonded with a photosensitive material, and the tubular soft actuator is a 3D hollow tube, the free tubular wall undergoes local contraction and expansion deformations under stimulation by a constant light source, driving the tubular soft actuator to generate autonomous wave motion with wave structures, wave structure is either a concertina-origami structure or a diamond-origami structure.

2. The method for phototunable self-sustainable waves of tubular soft actuator according to claim 1, wherein, comprising the following steps: the driving light source stably and continuously irradiates the unconstrained free tubular wall of the tubular soft actuator with a certain light intensity and a certain incident angle, the incident angle is 0°-60°, and the intensity is 0.1 W·cm⁻²-0.8 W·cm⁻².

3. The method for phototunable self-sustainable waves of tubular soft actuator according to claim 1, wherein, when the axial stress induced by the driving light source at the irradiation position reaches a level that can cause local buckling of the tubular soft actuator, the irradiated local tubular wall undergoes buckling along the diameter direction, then triggering postbuckling wall structures, and the post buckling wall structure naturally folds into the symmetric concertina-origami structure or the asymmetric diamond-origami structure based on the effects of circumferential contraction and axial expansion at adjacent deformation positions, and the buckling-induced wave spontaneously propagates along the direction of light irradiation.

4. The method for phototunable self-sustainable waves of tubular soft actuator according to claim 3, wherein, when the asymmetric diamond structure wave structure needs to be formed, the light intensity and the incident angle of the driving light source are simultaneously regulated, when the symmetric concertina-origami structure needs to be formed, the light intensity or incident angle of the driving light source is regulated, during the formation of the wave structure of the asymmetric diamond-origami structure, the degree of lateral buckling along the diameter direction of the local tubular wall is greater compared to that during the formation of the symmetric concertina-origami structure.

5. The method for phototunable self-sustainable waves of tubular soft actuator according to claim 1, wherein, when the light intensity of the driving light source is 0.1 W•cm⁻²-0.8 W•cm⁻² and the incident angle is 0°-60°, the concertina-origami structure is generated; when the light intensity of the driving light source is 0.5 W•cm⁻²-0.8 W•cm⁻² and the incident angle is 10°-40°, the diamond-origami structure is generated.

6. The method for phototunable self-sustainable waves of tubular soft actuator according to claim 1, wherein, the amplitude of the wave structure corresponding to the concertina-origami structure is 0 mm -1.9 mm, a frequency is 0 Hz-2 Hz, and a wavelength is 0 mm-16 mm; the amplitude of the wave structure corresponding to the diamond-origami structure is 0 mm-1.0 mm, a frequency is 0 Hz - 1 Hz, and a wavelength is 0 mm -10 mm.

7. The method for phototunable self-sustainable waves of tubular soft actuator according to claim 1, wherein, the tubular soft actuator is a 3D hollow tube, wherein the inner diameter of the hollow tube is 2 mm-5mm, the thickness of tubular wall is 90 µm-120 µm, preferably 100 µm, and the length is 30 mm-50 mm.

8. A system for phototunable self-sustainable waves of tubular soft actuator, comprising:
a driving light source;
a tubular soft actuator, wherein the raw material of the tubular soft actuator is a light-responsive deformable soft material doped or chemically bonded with a photosensitive material, and the tubular soft actuator is a 3D hollow tube;
when the tubular wall of the tubular soft actuator is illuminated by the driving light source, the free tubular wall undergoes local contraction and expansion deformation from the flat structure, and the tubular soft actuator generates autonomous wave motion with wave structures, the wave structure is either a concertina-origami structure or a diamond-origami structure.

9. The system for phototunable self-sustainable waves of tubular soft actuator according to claim 8, wherein, the system for phototunable self-sustainable waves of tubular soft actuator is used for continuously directional pumping of high viscosity liquids, the tubular soft actuator of the system serves as a peristaltic pump; the system for phototunable self-sustainable waves of tubular soft actuator is used to continuously and directionally transport a variety of regular and irregular solid matter, the tubular soft actuator of the system serves as a transport device.

10. The system for phototunable self-sustainable waves of tubular soft actuator according to claim 8, wherein, the system for phototunable self-sustainable waves of tubular soft actuator is used to drive rotation of matter, the tubular soft actuator of the system serves as a rotating device, and by changing the position and direction of the light spot of the driving light source illuminating the tubular soft actuator, the tubular soft actuator can manipulate intraluminal matter to directionally rotate the matter counterclockwise or clockwise.
